Europäisches Patentamt

European Patent Office

Office européen des brevets

(11) Veröffentlichungsnummer: **0 056 423**
B1

(19)

# EUROPÄISCHE PATENTSCHRIFT

(12)

(45) Veröffentlichungstag der Patentschrift:
14.08.85

(21) Anmeldenummer: 81100306.0

(22) Anmeldetag: 16.01.81

(51) Int. Cl.⁴: **F 16 K 11/24,** F 16 K 47/08

(54) Elektromagnet-betätigtes Mehrstellungs/Mehrwege-Hydraulikventil.

(43) Veröffentlichungstag der Anmeldung:
28.07.82 Patentblatt 82/30

(45) Bekanntmachung des Hinweises auf die Patenterteilung:
14.08.85 Patentblatt 85/33

(84) Benannte Vertragsstaaten:
AT BE CH DE FR GB IT LI LU NL SE

(56) Entgegenhaltungen:
DE - A - 2 728 648
DE - A - 2 850 590
US - A - 3 371 685

(73) Patentinhaber: Heilmeier & Weinlein Fabrik für
Oel-Hydraulik GmbH & Co. KG, Neumarkter Strasse 26,
D-8000 München 80 (DE)

(72) Erfinder: Brunner, Rudolf, Wankstrasse 23,
D-8011 Baldham (DE)

(74) Vertreter: Patentanwälte Dipl.-Ing. A. Grünecker,
Dr.-Ing. H. Kinkeldey, Dr.-Ing. W. Stockmair,, Dr. rer. nat.
K. Schumann, Dipl.-Ing. P.H. Jakob, Dr. rer. nat. G.
Bezold Maximilianstrasse 58, D-8000 München 22 (DE)

EP 0 056 423 B1

ACTORUM AG

## Beschreibung

Die Erfindung betrifft ein Mehrstellungs/Mehrwege-Hydraulikventil der im Gattungsbegriff des Patentanspruchs 1 angegebenen Art, bekannt aus der DE-A 2 850 590.

Bei einem aus der US-A 3 371 685 bekannten Mehrstellungs/Mehrwege-Hydraulikventil, das zur Strömungs-Steuerung und Umsteuerung eines Heizmediums zwischen einem Heizkreis und einem Bypasskreis aus einer Versorgungsleitung beaufschlagt wird, ist der Drosselkörper ein Ringkörper aus einem elastischen Werkstoff, der einen mit dem Einlass zur Ventilbohrung fluchtenden Durchgang besitzt. Der Durchgang im Drosselkörper entspricht bei unverformtem Drosselkörper in etwa dem Durchmesser des Einlasses zur Ventilbohrung, während der Durchmesser im Druckeinlass vor dem Drosselkörper grösser gewählt ist. Der Drosselkörper soll sich unter dem Einfluss der Mediumströmung derart verformen, dass er bei steigendem Einlass im Druckeinlass seinen Durchgang verkleinert, damit der Druck in der Ventilbohrung unterhalb einer festgesetzten Grenze bleibt, so dass die seitlichen Anpresskräfte für das Ventilelement nicht so gross werden können, dass der Betätigungsmagnet nicht mehr in der Lage wäre, das Ventilelement ordnungsgemäss zu bewegen. Bei diesem Ventil findet stets eine Strömung statt, da immer eine Verbindung zwischen dem Einlass und einem der beiden Anschlüsse offen ist. Der Drosselkörper arbeitet als Stromregelelement, in dem er bei ansteigendem Druck im Druckeinlass und der sich dadurch erhöhenden Strömungsgeschwindigkeit durch die dynamischen Strömungskräfte im Druckeinlass in Richtung zum Einlass zur Ventilbohrung hin verformt wird und dabei aufgrund seiner Formgebung seinen Durchgang verkleinert, was zur Folge hat, dass der Strömungswiderstand durch den Durchgang soweit ansteigt, dass der Druck in der Ventilbohrung die vorher erwähnte Grenze nicht erreicht. Der Drosselkörper spricht kaum auf Druckunterschiede zwischen dem Druckeinlass und dem Einlass an, da seine Druckbeaufschlagungsflächen auf beiden Seiten annähernd gleich gross sind, sondern auf die dynamischen Strömungskräfte des strömenden Hydraulikmediums. Seine drosselnde Wirkung verstellt sich in Abhängigkeit von der Strömung bzw. von Veränderungen der Fördermenge, die er für die Ventilbohrung annähernd konstant hält. Seine maximale drosselnde Wirkung entfaltet der Drosselkörper bei der grössten Fördermenge, während er bei kleineren Fördermengen passiv bleibt bzw. eine nur unwesentliche Drosselung zu erbringen vermag.

Aus der DE-A 2 728 648 ist es bekannt, eine Kaskaden-Drossel mit vorbestimmtem, festem Drosselfaktor stromab zu einer weiteren in ihrer Drosselwirkung verstellbaren Kaskaden-Drossel anzuordnen, um mechanische Schäden, z.B. durch Kavitation an der stromaufliegenden, verstellbaren Kaskaden-Drossel zu vermeiden, in dem die stromabliegende feste Kaskaden-Drossel für die stromaufliegende verstellbare Kaskaden-Drossel einen Gegendruck aufrechterhält, der das Druckgefälle über die verstellbare Kaskaden-Drossel verringert.

Der Erfindung liegt die Aufgabe zugrunde, ein Hydraulikventil der eingangs genannten Art dahingehend zu verbessern, dass bei hohen Betriebsdrücken des hinsichtlich Kavitation kritischen Hydraulikmediums mechanische Schäden oder eine starke Abnutzung innerhalb des Hydraulikventils vermieden werden.

Die gestellte Aufgabe wird erfindungsgemäss durch die im kennzeichnenden Teil des Patentanspruchs 1 angegebenen Merkmale gelöst.

Bei einem solchen Hydraulikventil ist die Gefahr von mechanischen Schäden durch Kavitation im Innern des Ventils dann besonders gross, wenn das Ventil aus einer Stellung geschaltet wird, in der der Druckeinlass mit einem Anschluss verbunden ist. Am Schaltbeginn treten nämlich schon bei geringer Fördermenge die grössten Strömungsgeschwindigkeiten auf, und entstehen bei den hohen Betriebsdrücken bis zu 500 bar die grössten Druckdifferenzen innerhalb des Ventils. In der Kaskaden-Drossel wird ein Teil der kinetischen Energie abgebaut, so dass das Hydraulikventil wirksam gegen mechanische Schäden geschützt ist. Der Energie-Abbau erfolgt dabei in der Kaskaden-Drossel nicht an einer Stelle, sondern an vielen gleichmässig belasteten Stellen, so dass auch der Verschleiss in der Kaskaden-Drossel vernachlässigbar gering bleibt. Insgesamt erhöht sich damit die Standzeit des Hydraulikventils und es braucht – wenn überhaupt – nur die Kaskaden-Drossel auf ihre Abnutzung überwacht und gegebenenfalls ausgetauscht zu werden, was billiger und einfacher ist, als das ganze Hydraulikventil oder seine beschädigten Elemente zu erneuern. Durch Bestimmung des Drosselfaktors der eingesetzten Kaskaden-Drossel lässt sich das Hydraulikventil von vornherein an die gegebenen Betriebsbedingungen anpassen bzw. bei sich ändernden Betriebsbedingungen umstellen.

Der Einbau und ein eventueller Austausch der Kaskaden-Drossel lässt sich dann besonders einfach vollziehen, wenn die Merkmale von Anspruch 2 gegeben sind.

Schliesslich ist eine zweckmässige Ausführungsform in Anspruch 3 erläutert. In der Kaskaden-Drossel wird die Strömung mehrfach umgelenkt und in vielen Stufen gedrosselt, wobei die einzelnen Teile der Drossel einer spezifisch geringen Belastung unterworfen werden. Die so ausgebildete Kaskaden-Drossel zeigt auch nach langer Standzeit und häufigen Schaltbetätigungen des Hydraulikventils keinen nennenswerten Verschleiss.

Nachfolgend wird die Erfindung anhand eines in der Zeichnung dargestellten Ausführungsbeispiels erläutert.

In der Zeichnung zeigen:

Fig. 1 eine Seitenansicht eines Elektromagnet-Hydraulikventils,

Fig. 2 eine Druntersicht unter das Elektromagnet-Hydraulikventil von Fig. 1, und

Fig. 3 eine Ausführungsform einer in das Elektromagnet-Hydraulikventil gemäss Fig. 1 und 2 eingesetzten Kaskaden-Drossel im Axialschnitt und in einer im Massstab vergrösserten Darstellung.

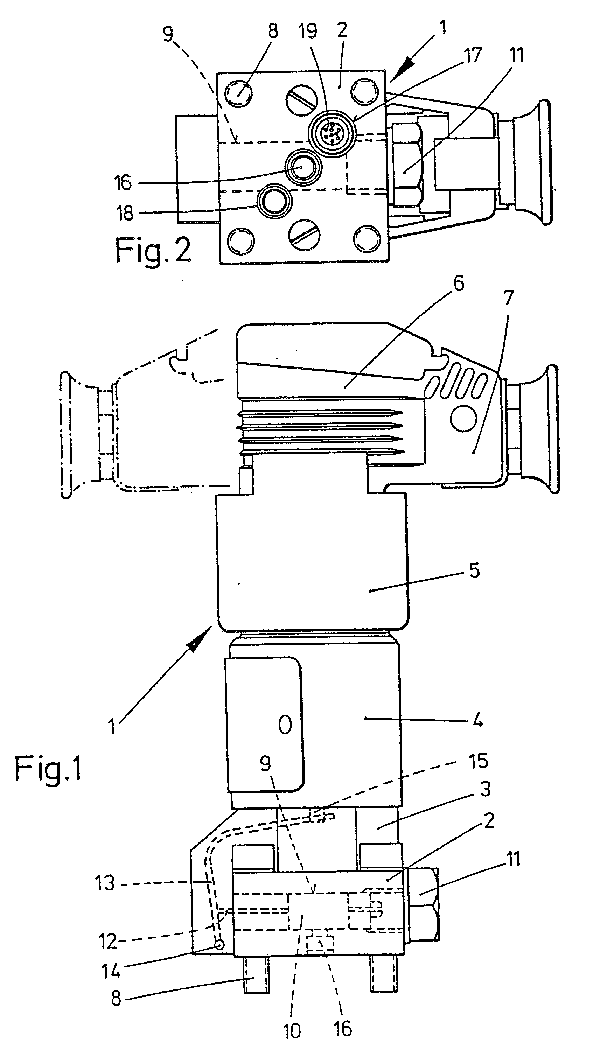

Ein Elektromagnet-Hydraulikventil 1 in Gestalt eines schlanken Turmes besteht aus einem Hydraulikventil-Gehäuse 2, das von einem aufgesetzten Bauteil 3 zum Teil umgriffen wird. Auf dem Teil 3 ist ein Zwischenstück 4 aufgesetzt, das einen Magnetteil 5 mit einem aufgesetzten Kopf 6 trägt. Am Kopf 6 ist ein Leitungsanschluss 7 erkennbar, der zusammen mit dem Kopf 6 um 180° (strichpunktiert angedeutet) verdreht festgelegt werden kann. Der gesamte Aufbau lässt sich mit das Ventilgehäuse 2 durchsetzenden Befestigungsschrauben 8 (siehe auch Fig. 2) auf einer nicht dargestellten Montageschiene oder einem Verteilerstück festlegen, in dem dann weiterführende Kanäle angeordnet sind.

Das Ventilgehäuse 2 wird von einer Ventilbohrung 9 durchsetzt, in der Ventilelemente 10 enthalten sind. Die Ventilelemente 10 werden durch eine Schraube 11 der Ventilbohrung 9 lagegesichert. Ein Betätigungsstössel 12 ragt am der Schraube 11 abgewandten Ende aus dem Ventilgehäuse 2 heraus und arbeitet mit einem Schwenkhebel 13 zusammen, der um ein Drehlager 14 um Teil 3 schwenkbar gelagert ist. Das freie Ende des Hebels 13 liegt an einem Druckstössel 15 an, der beispielsweise bei Erregen des Elektromagneten in der Fig. 1 nach unten bewegt wird.

In etwa in der Längsmittelebene des Ventilgehäuses 2 mündet ein Anschluss 16 (siehe Fig. 2) in die Ventilbohrung 9. Seitlich dazu versetzt münden ferner ein Versorgungsanschluss 17 und ein Rücklaufanschluss 18 in die Ventilbohrung 9. Durch Betätigung der Ventilelemente 10 mittels des Stössels 12 und des Hebels 13 kann bei dieser Ausführung des Hydraulikventils (Dreiwege/Zweistellungs-Ventil) entweder der Versorgungsanschluss 17 mit dem Verbraucheranschluss 16 verbunden werden, wobei der Rücklaufanschluss 18 abgesperrt bleibt, oder es lässt sich der Verbraucheranschluss 16 mit dem Rücklaufanschluss 18 verbinden, wobei der Versorgungsanschluss 17 gegenüber dem Verbraucheranschluss 16 abgesperrt bleibt. Diese Funktionen sind bekannt; wie auch die Ventilelemente 10, so dass darauf nicht näher einzugehen ist.

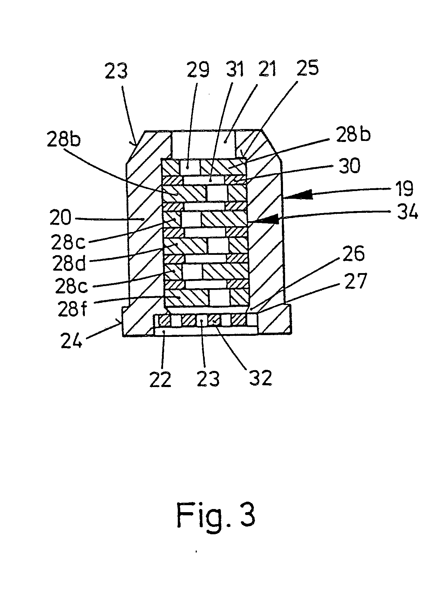

In den Versorgungsanschluss 17 ist eine Kaskaden-Drossel 19 eingesetzt, vorzugsweise eingesteckt, die im Detail aus Fig. 3 hervorgeht.

Die Kaskaden-Drossel 19 besitzt ein topfförmiges Aussengehäuse 20 mit einer Auslassöffnung 21 und einer dieser gegenüber grösseren Einlassöffnung 22. Das Aussengehäuse 20 ist am der Auslassöffnung 21 zugewandten Ende kegelförmig angespitzt, während es der Öffnung 22 zugewandten einen verdickten, umlaufenden Rand 24 besitzt, mit dessen Unterseite es gegen eine Schulter in der Anschlussöffnung anliegen kann. Im Innern des Aussengehäuses 20 ist eine Stufenbohrung 34 vorgesehen, die am einen Ende von einer Schulter 25 begrenzt wird. Zwischen der Einlassöffnung 22 und der Bohrung 34 befindet sich eine weitere Schulter 27.

In die Innenbohrung sind Blendenplatten 28a bis 28f mit im Verhältnis zur Auslassöffnung 21 kleindurchmessrigen Blendenöffnungen 29 in Strömungsrichtung hintereinander gesetzt. Zwischen jeweils zwei Blendenplatten ist eine Zwischenplatte 30 mit einer im Verhältnis zur Grösse der Blendenöffnung 29 grösseren Durchgangsöffnung 31 eingesetzt. Die Blendenöffnungen 29 jeweils zweier benachbarter Blendenplatten sind quer zur Längsrichtung der Kaskaden-Drossel 19 zueinander versetzt. Das Paket der Blendenplatten 28a bis 28f mit den dazwischenliegenden Zwischenplatten 30 ist dadurch in der Bohrung 34 lagegesichert, dass das Aussengehäuse bei 26 verstemmt oder in anderer Weise verformt wurde. In der Einlassöffnung 22 liegt ein Schmutzsieb 32 auf der Schulter 27 auf, das eine Vielzahl kleiner und axial verlaufender Durchgangsöffnungen 33 aufweist. Das Sieb 32 ist in die Einlassöffnung 22 eingepresst.

Der Versorgungsanschluss 17 des Ventilgehäuses 2 ist in seiner Grösse und seinem Durchmesser exakt auf die äusseren Abmessungen der Kaskaden-Drossel 19 abgestimmt, so dass diese ggf. durch Einpressen sicher an Ort und Stelle gehalten wird. Gegebenenfalls ist die Tiefe des Versorgungsanschlusses grösser als die Länge der Kaskaden-Drossel 19, so dass diese durch einen hinter ihr eingesetzten Federring im Versorgungsanschluss gehalten wird. Nach Entnahme des Federrings kann die jeweils verwendete Kaskaden-Drossel einfach gegen eine Kaskaden-Drossel mit einem anderen Drosselfaktor ausgetauscht werden. Es genügt auch, wenn die Kaskaden-Drossel nur in die Anschlussöffnung eingesteckt und darin von einem Anschlussbauteil zum Zuführen des Druckmediums lagegesichert wird. Zur Abdichtung kann dabei auch ein O-Ring verwendet werden.

**Patentansprüche**

1. Mehrstellungs/Mehrwege-Hydraulikventil, insbesondere für Steuerungszwecke im Bergbau-Untertage-Betrieb oder für ähnliche eigensichere Anwendungen, wobei als Hydraulikmedium Wasser oder eine Öl/Wasser-Emulsion hohen Druckes, z.B. bis zu 500 bar, verwendet wird, mit einem Schwachstrom-Betätigungsmagneten (5), der auf ein Ventilgehäuse (2) aufgesetzt ist, das einen an eine Druckquelle angeschlossenen Druckeinlass (17) zu einer bewegliche Ventilemente (10) enthaltenden Ventilbohrung (9) aufweist, in die wenigstens ein weiterer Anschluss (16,18) mündet, dadurch gekennzeichnet, dass im Druckeinlass (17) ein Drosselkörper (19) eingesetzt ist, der als Kaskaden-Drossel mit bestimmtem festem Drosselfaktor ausgebildet ist.

2. Mehrstellungs/Mehrwege-Hydraulikventil nach Anspruch 1, dadurch gekennzeichnet, dass der Drosselkörper (19) im Druckeinlass (17) durch einen Federring lagegesichert ist.

3. Mehrstellungs/Mehrwege-Hydraulikventil nach einem der Ansprüche 1 oder 2, dadurch gekennzeichnet, dass der Drosselkörper (19) eine Vielzahl von in Strömungsrichtung hintereinanderliegenden Blendenplatten (28a bis 28f) mit quer zur Strömungsrichtung zueinander versetzten Blendenöffnungen (29) enthält, wobei die Blendenplatten durch in bezug auf die Dicke der Blendenplatten dünne Zwischenplatten (30) mit gegenüber den Blendenöffnungen (29) grösseren Durchgangsöffnungen (31) voneinander getrennt sind.

## Claims

1. A multi-position multiple-way hydraulic valve, particularly for control purposes in underground mining operations or for similar fail-safe applications, wherein the hydraulic medium employed is water or an oil-water emulsion at a high pressure of for instance up to 500 bar, comprising a low-current actuating solenoid (5) mounted on a valve housing (2) having a pressure inlet (17) opening into a valve bore (9) containing movable valve elements (10) and having at least one further connection (16, 18) opening thereinto, characterized in that said pressure inlet (17) has inserted therein a throttling member (19) formed as a cascade throttle having a determined fixed throttling factor.

2. A multi-position multiple-way hydraulic valve according to claim 1, characterized in that said throttle member (19) is secured in position within said pressure inlet (17) by means of a spring washer.

3. A multi-position multiple-way hydraulic valve according to any of claims 1 or 2, characterized in that said throttle member (19) comprises a plurality of throttle plate members (28a to 28f) disposed one behind the other in the direction of flow and formed with restricted passages (29) at offset positions relative to one another transversely of the direction of flow, said throttle plate members being separated from one another by partition plates (30) having a thickness less than that of said throttle plate members and being formed with passages (31) of larger dimensions than said restricted passages (29).

## Revendications

1. Vanne hydraulique à plusieurs voies et à plusieurs positions destinée à des commandes dans l'exploitation minière au fond ou à d'autres utilisations à sécurité intrinsèque, dans laquelle on utilise comme fluide hydraulique de l'eau ou une émulsion huile/eau à pression élevée, allant par exemple jusqu'a 500 bar, et comportant un électroaimant d'actionnement à courant faible (5) placé sur un carter de vanne (2), qui comporte une arrivée de fluide sous pression (17) raccordée à une source de pression, à un alésage de vanne (9), contenant des éléments de vanne mobiles (10), alésage dans lequel débouche au moins un autre raccordement (16, 18), caractérisée en ce que dans l'arrivée du fluide sous pression (17) est logé un organe d'étranglement (19) qui est réalisé en tant qu'organe d'étranglement à cascade ayant un facteur d'étranglement fixe déterminé.

2. Vanne hydraulique à plusieurs voies et à plusieurs positions selon la revendication 1, caractérisée en ce que l'organe d'étranglement (19) est maintenu en position dans l'arrivée du fluide sous pression (17) par un anneau à ressort.

3. Vanne hydraulique à plusieurs voies et à plusieurs positions selon l'une des revendications 1 ou 2, caractérisée en ce que l'organe d'étranglement (19) contient une multiplicité de plaques de diaphragme (28a à 28f) disposées l'une derrière l'autre dans le sens de l'écoulement et comportant des ouvertures de diaphragme (29) décalées l'une par rapport à l'autre transversalement au sens de l'écoulement, les plaques de diaphragme étant séparées l'une de l'autre par des plaques intermédiaires (30) plus minces qu'elles et comportant des ouvertures de passage (31) plus grandes que les ouvertures de diaphragme (29).

0 056 423

Fig. 2

Fig. 1

Fig. 3